# EUROPEAN PATENT APPLICATION

(11) **EP 1 554 935 A1**
(43) Date of publication of application: **20.07.2005**
(21) Application number: 04388024.4
(22) Date of filing: 22.03.2004
(51) Int. Cl.: A23G 3/30

(54) **Layered chewing gum tablet**

(30) Priority: 19.01.2004 DK 200400057
(71) Applicant: Gumlink A/S, 7100 Vejle (DK)
(72) Inventor: Schmidt, Niels Ravn, DK-7150 Barrit (DK)
(74) Representative: Indahl, Peter Jensen

(57) **Abstract**

The invention relates to a layered chewing gum tablet comprising at least one layer containing gum base, wherein the at least one layer containing gum base comprises gum base in an amount of 35.5 to 86.5 weight-% based on the total weight of the layered chewing gum tablet and the gum base is present in compressed gum granules having an average diameter in the range of 0.1 to 2.5 mm. Preferably the layered chewing gum tablet also comprises at least one layer that is substantially free of gum base.

## Description

The present invention relates to a layered chewing gum tablet comprising at least one layer containing gum base and a method for manufacturing a layered chewing gum tablet.

Layered chewing gum tablets are disclosed in e.g. U.S 4,139,589 A and DE 28 08 160 Al. These known types of layered chewing gum tablets comprise a total gum base content of up to about 30-33 weight-%, which traditionally has been considered an upper limit for the gum base content. The remaining content in the tablets is usually a rather large amount of sweetener in combination with minor amounts of flavours. The tablets may optionally contain other ingredients like fillers, pharmaceutical species, colouring agents etc. Consequently, the known tablets have large amounts of ingredients, which are soluble in water. Thus, when exposed to the saliva in a consumer's mouth the soluble ingredients of the tablet will dissolve, causing the volume of the tablet to decrease. This decrease of chewing mass will leave the consumer with an unpleasant feeling of a disintegrating tablet during chewing.

An object of the present invention is to provide a layered chewing gum tablet having less reduction in volume and improved organoleptic properties during chewing.

The invention provides a new type of layered chewing gum tablet, which during chewing provides a pleasant feeling of both taste and duration of taste to the consumer.

Accordingly, the invention provides a layered chewing gum tablet of compressed material comprising at least two layers wherein at least one of the at least two layers contains gum base, and that the at least one layer containing gum base comprises gum base in an amount of 35.5 to 86.5 weight-% based on the total weight of the layered chewing gum tablet, the gum base being present in compressed gum granules having an average diameter in the range of 0.1 to 2.5 mm. As gum base is essentially insoluble in water (and saliva) the volume constituted by the amount of gum base will not be reduced during chewing. Consequently, the surprising high amount of gum base in at least one layer of the layered tablet has lead to the unexpected formation of a chewing gum product with excellent organoleptic properties for the consumer like e.g. better remaining volume and coherence. Moreover, according to the invention the gum base part is constituted by compressed granules having an average diameter in the range 0.1 to 2.5 mm, which in combination with the high content of gum base has also proven to improve the organoleptic properties. As such, it is preferred that the entire layered tablet consist of compressed powders, particles or granules as compressed material. The compressed powders, particles or granules have of course different compositions depending on in which layer or part of the tablet they are present. Preferably the compressed powders, particles or granules have average diameters below 2.5 mm in order to facilitate compression into tablets. More preferred powders has average diameters in the range of 0.001 to 0.25 mm and particles and granules average diameters in the range of 0.1 to 2.5 mm.

For the purpose of further improving the properties of the layered chewing gum tablet according to the invention it is preferred that the at least one layer containing gum base contains gum base in an amount of 38.5 to 76.5 weight-% based on the total weight of the layered chewing gum tablet to obtain a satisfactory remaining volume. Preferably the at least one layer containing gum base contains gum base in an amount of 39.5 to 65.5 weight-% based on the total weight of the layered chewing gum tablet to obtain a even more satisfactory remaining volume. More preferably the at least one layer containing gum base contains gum base in an amount of 40.5 to 55.5 weight-% based on the total weight of the layered chewing gum tablet to obtain good satisfactory remaining volume in combination with excellent organoleptic properties. The at least one layer containing gum base, may per se contain 100 % gum base or up to 90.5 weight-% gum base or even up to 96.5 weight-% gum base in order to provide better coherence of the tablet. Generally the at least one layer containing gum base does not contain less than about 60 weight-% gum base, and not less than about 43.4 to 46.6 weight-% gum base, preferably the lower limit for the gum base content in the layer is from about 45.5 to 51.8 weight-% in order to secure a satisfactory volume of the tablet during chewing. Thus, the at least one layer containing gum base, may besides the gum base contain other ingredients, for example sweeteners and flavours that can improve the duration of taste by incorporation of the ingredients in the gum base. The aforementioned layer may suitable contain sweetener in an amount of about 1.5 to 40.2 weight-% and flavour in an amount of about 0.4 to 5.1 weight-%. Examples of specific sweeteners and flavour useable in the invention will be described later.

The layered chewing gum tablet according to the invention may comprise two, three, four, five or more layers. However, it is preferred that at least one layer is substantially free of gum base. A layer substantially free of gum base can be made crunchy, and may also disintegrate more rapid, which in case of releasing an active ingredient may be an advantage. Preferably the content of gum base in the layer substantially free of gum base does not exceed 1 weight-%, more preferably the content of gum base does not exceed 0.5 weight-%, and most preferred the content of gum base does not exceed 0.3 weight-% based on total weight of the layered chewing gum tablet. This embodiment provides the opportunity to e.g. manufacture a tablet with a crunchy layer. Normally it is not possible to obtain a crunchy appearance of a layer that contains large amounts of gum base.

The at least one layer substantially free of gum base preferably serves to improve the taste of the layered chewing gum tablet and, therefore, it mainly comprises one or more sweeteners and one or more flavours.

Preferably the at least one layer substantially free of gum base comprises sweetener in an amount of 49.6 to 98.2 weight-%, and flavours in an amount of 1.8 to 50.4 weight-%. Suitable sweeteners and flavours will be described later.

As previously mentioned in the layered chewing gum tablet according to the invention the at least one layer containing gum base comprises the gum base in one or more gum granules. The use of gum granules may not only improve the texture and organoleptic properties of the layered tablet, but also facilitate the manufacture of the layered tablet, as the gum granules can be used directly in a conventionally commercially available tablet pressing machine, without need for further processing.

Accordingly, it is preferred that the gum granules comprises gum base in an amount of 55 to 100 weight-%, suitable in an amount of 57.5 to 99.1 weight-%, preferable in an amount of 58.9 to 98.5 weight-%, more preferred in an amount of 61.5 to 97.2 weight-% based on the weight of the gum granules. The content of gum base serves maintain a desired volume of the tablet and to give the layered tablet a softer "feeling" during chewing and thereby improving the organoleptic feeling. In preferred embodiments the gum granules comprise sweeteners and flavours.

Although the gum granules may vary in shape, they are, at least before tablet pressing, preferably spherically, and in order to facilitate manufacture of the layered chewing gum tablets, it is preferred that the gum granules have an average diameter in the range of 0.1 mm to 2.5 mm, preferably in the range of 0.3 mm to 2.1 mm, and more preferred in the range of 0.5 mm to 1.8 mm. The gum granules may be manufactured as described in European patent application no. 03388031.1, which is incorporated herein in its entirety.

According to the invention it is preferred, that the layer comprising gum base, includes gum granules in a matrix comprising gum granules, sweeteners, flavours, colouring agents, fillers and optional other additives, which may be waxes, tabletting aids etc.

Preferably the total weight of the tablet is in the range 0,3 - 2,1 g, preferable in the range 0,5 - 1,8 g. Such tablets have proven to be suitable for must consumers.

The layered tablet may in principle have any desired shape and size, like a circular disc, a rectangular disc, plate-like, egg-like, cubic or spherically. However, circular and rectangular tablets are desirable and optionally with slightly concave or curved surfaces, as such shaped tablets are relatively uncomplicated to produce. A circular layered tablet according to the invention preferably has a diameter of about from 8 to 20 mm and a thickness in the range of 4 to 10 mm. A rectangular layered tablet according to the invention preferably has a length in the range of 8 to 25 mm, a width in the range of 4 to 12 mm and a thickness in the range of 4 to 10 mm.

The layered chewing gum tablet according to the invention may be coated or uncoated. However, for some embodiments it is preferred that the tablet comprises a coating, e.g. a coating based on sugars or polyols, or preferably a film coating, e.g. based on hydroxy methylcellulose. The coating may serve to prevent moisture penetrating the tablet and destroy its properties during storage.

For some preferred embodiments of the layered chewing gum tablet according to the invention at least one layer may contain one or more active ingredient, preferably selected from the group consisting of nicotine, caffeine, paracetamol, benzocaine, vitamin E, vitamin A, vitamin D, acetyl salicylic acid, methadone, the active components from gingko, the activ components from propolis, the active components from ginseng, and any combination thereof.

According to the invention the layered chewing gum tablet may comprise at least one barrier layer. The barrier layer may e.g. serve to separate two substances that will react when brought into contact with each other, and that reaction desirably not appears until the tablet being chewed by a consumer. The substances may e.g. be drugs or flavours. The barrier layer is constituted by a material that prevents transport of the substances, e.g. by being diffusion tight. The barrier layer may e.g. be made from gum base or polyol or a combination thereof.

The two substances separated by a barrier layer may be present on one side of the layer containing gum base or on each side of the layer containing gum base. In the embodiment where the substances are present on each side of the at least one layer containing gum base the at least one layer containing gum base preferably constitutes the at least one barrier layer.

In a second aspect the invention relates to a method for manufacturing a layered chewing gum tablet, which method comprises at least the following step:
i) placing a first portion to constitute a first layer in a mould and pre-press the first portion, and
ii) placing a second portion to constitute a second layer onto the pre-pressed first layer in the mould, and
iii) pressing the layers to form a layered tablet
in which method the first portion comprises gum base in an amount of 35.5 to 86.5 weight-% based on the total weight of the layered chewing gum tablet and the gum base is present in gum granules having an average diameter in the range of 0.1 to 2.5 mm.

According to a preferred embodiment of the method the second portion forming the second layer is substantially free of gum base. The second layer may essentially consist of sweeteners and flavours that will improve the overall taste of the layered chewing gum tablet.

Furthermore, in some embodiments of the method for manufacturing a layered chewing gum tablet according to the invention it is preferred that a third portion to constitute a third layer is placed onto the second portion of tablet layer after step ii) and before step iii). Thus the layered tablet comprises three layers. Preferably the second portion is pre-pressed before the third portion of tablet layer is placed onto the second portion of tablet layer.

As the skilled person will recognize more layers may be added to the three layers to form a multilayered tablet according to the invention. The layers may in turn be different or the substantially identical. Preferably each single layer is pre-compressed before the next layer is placed onto it.

Preferably the first portion forming the tablet layers is constituted by granules having an average diameter in the range of 0.1 mm to 2.5 mm, preferably in the range of 0.3 mm to 2.1 mm, and more preferred in the range of 0.5 mm to 1.6 mm. Granules with such average diameters have proven to facilitate the handling of the granules in the method according to the invention.

Moreover, it is preferred that the granules comprises gum base in an amount of 55 to 100 weight-%, preferable in an amount of 61.5 to 97.2 weight-% based on the weight of the granules. Thereby the method provides layered chewing gum tablets with excellent properties during chewing.

The tablets according to the invention can be used without further treatment, but for some preferred embodiments of the method for manufacturing a layered chewing gum tablet according to the invention the method comprises the further step of coating the tablets. The coating may be a sugar coating, a sugarfree coating or a film coating. Materials for such coatings are commercially available and methods for coating tablets are well within the knowledge of the skilled person.

The invention will now be explained in further details with reference to preferred embodiments and a drawing in which:
- Fig 1:: shows two embodiments of the layered chewing gum tablet according to the invention.
- Fig 2:: shows a schematic illustration of an embodiment of the method according to the invention

The term "compressed materials" as used herein has to be understood rather broad as comprising powders, granules, particulate material etc., which are capable of forming a part of a compressed chewing gum tablet. Thus, the term includes for example gum granules, sweeteners in powder form and also encapsuled liquid flavour. Moreover, the term may comprise liquid, e.g. viscous liquids like waxes.

As used herein the term "gum base" refers in general to a commercially available gum base suitably for production of chewing gum. Such gum bases normally comprise natural and/or synthetic resins and optionally other ingredients.

The term "gum granules" or "granules" as used herein refers to particulate material of gum composition having average diameters in the range of 0.1 to 2.5 mm.

Moreover the term "compressed gum granules" refers the gum granules present in chewing gum tablet in compressed state. The gum granules may then be deformed from their original shape and adhere to each other forming a more or less coherent mass due to the forces of compression. The individual gum granules can, however, still be identified, optionally by use of microscope.

The term "gum composition" as used herein may be a gum base as defined above, a gum base comprising one or more ingredients (e.g. sweetener, flavour, colouring agents, fillers etc.).

The term "chewing gum tablet" is the final product, ready for use by the consumer. A chewing gum tablet may comprise sweetener and/or flavour and optionally other ingredients like colouring agents, pharmaceutical agents, enzymes, humectants, flavour enhancers, anticaking agents etc.

The term "average diameter" as used herein is defined as the diameter of a sphere having the same volume as e.g. the granule. Although the granules used according to the present invention primarily are substantially spherically, variations in shape may occur, and according to the definition granules having the same volume also have the same average diameter.

Unless otherwise indicated all percentages are in weight percentages (denoted weight-%).

According to the present invention the layered chewing gum tablet comprises at least one layer containing gum base, which comprises gum base in an amount of 35.5 to 86.5 weight-% based on the total weight of the layered chewing gum tablet.

The gum base used according to the invention may be any water-insoluble gum base well known in the art. Illustrative examples of suitable polymers for gum base include, natural and synthetic elastomers, resins and rubbers. For example, suitable polymers include substances of vegetable origin such as rubber latex solids, chicle, gelutong, nispero, rosidinha, pendare, perillo, niger gutta, tunu, gutta percha, and crown gum. Synthetic elastomers such as butadiene-styrene copolymers, isobutylene-isoprene copolymers, polyethylene, polyisobutylene, petroleum wax and polyvinylacetate and mixtures thereof are also useful in gum base.

Gum base may also contain elastomer solvents to aid in softening the gum base. Such materials may include methyl, glycerol or pentaerythritol esters of rosins; methyl, glycerol or pentaerythritol esters of modified rosins, such as hydrogenated, dimerized or polymerized rosins; mixtures thereof and the like. Examples of such materials include pentaerythritol esters of partially hydrogenated wood rosin, pentaerythritol esters of wood rosin, glycerol esters of partially dimerized rosin, glycerol esters of polymerized rosin, glycerol esters of tall oil rosin, glycerol esters of wood rosin or partially hydrogenated wood rosin, partially hydrogenated metal esters of rosin such as polymers of alpha.-pinene or .beta.-pinene, terpene resins including polyterpene, mixtures thereof and the like.

A variety of traditional ingredients such as plasticizers or softeners, such as lanolin, stearic acid, sodium stearate, potassium stearate, glyceryl, triacetate, glycerine, natural waxes, petroleum waxes such as polyurethane waxes, paraffin waxes and microcrystalline waxes, may also be incorporated into a gum base to obtain a variety of desirable textures and consistency properties.

Other conventional ingredients that may be present in a gum base include a hydrophilic-type detackifier that will absorb saliva and become slippery. The hydrophilic type detackifier should preferably be incompatible with the elastomer and solvent for the elastomer, and may include such materials as polyvinyl acetate, polyvinyl butyl ether, copolymers of vinyl esters and vinyl ethers, mixtures thereof and the like.

Gum base may also include hard waxes that serve as lubricants. Examples of such hard waxes include candelilla wax, paraffin wax, carnauba wax, ozokerite, oricuri, microcrystalline wax and the like.

Gum base may also include a softening agent and/or lubricant that may comprise one or more hydrogenated vegetable or animal fats preferably having a high melting point above about 22°C.

Gum base may also include an emulsifier to impart hydrophilic properties to the gum base. The emulsifier causes saliva to be absorbed into the gum base, thereby making the gum base slippery. Examples of such emulsifiers may include glyceryl monostearate, phosphatides such as lecithin and sephalin, mixtures thereof and the like.

The gum base may also include particles of chalk or the like as a bulking agent and/or texturizer. Examples of such texturizing agents or inert fillers suitable for use in gum base include, calcium carbonate, aluminium hydroxide, alumina, magnesium carbonate, talc, aluminium silicates, mixtures thereof and the like.

Such gum bases are well known in the art, and may be modified to provide a variety of consistency, texture and other properties to the chewing gum product. The gum base for the tablets is preferably present as granules conveniently with average diameters in the range 0.1 to 2.5 mm. The gum granules may be produced in several ways, which all are well known for the skilled person, e.g. punching, cutting, chipping etc. In particular the granules can produced by underwater granulating as described in European patent application no 03388031.1.

Besides gum base the layered chewing gum tablet according to the invention may also comprise other constituents in the at least one layer containing gum base. These other constituents are preferably selected among sweeteners and flavours.

Sweeteners can e.g. be selected among bulk sweeteners such as sugar sweeteners, less or non-sweet sugars or polysaccharides, non-sugar sweeteners, such as the polyols isomalt, sorbitol, sorbitol syrup, mannitol, xylitol, hexa-resorcinol, maltitol, isomaltol, erythriol, lactitol, xylose, tagatose and hydrogenated starch hydrolysates (maltitol syrup); artificial high potent sweeteners or intense sweeteners such as the dipeptides aspartame, neotame and alitame; N-sulfonylamides such as saccharin including the salts thereof and acesulfam including the salts thereof; or any combination thereof.

The flavouring agents suitably for use in the present invention can e.g. be a natural, natural-identical, or artificial flavouring substance, or a mixture thereof. At room temperature the flavouring agent may be in solid state as a dry powder or flavour granules, or in liquid state as an essence or oil, or mixtures thereof. The dry flavours may include standard powder (i.e. a liquid flavouring agent mixed homogeneously with a powder carrier material), spray dried powder whereby the flavouring agent is coated by a protective layer (i.e. microencapsulated), freeze dried powder, or flavour granules. Flavour granules differ from the powders by substantially larger particle sizes (approximately 500-1500 µm) compared to powders (approximately 10-150 µm). Optionally these flavour granules may also comprise a colouring agent and thereby provide a visual effect in the product. Furthermore, seeds derived from berries and fruits may also be included as dry flavouring agents.

The liquid flavouring agents may include essences also known as extracts which are concentrated flavouring agents produced either by reducing a liquid until it is a syrup or by dissolving a spice or flavouring oil in alcohol, and essential oils also known as flavouring oils which are highly concentrated essences.

Preferably, the solid and the liquid flavouring agents are encapsulated in a protective matrix protecting them from heat and moisture and thereby reducing the oxidation and evaporation of the liquid flavouring agent. As a result the stability of the flavouring agent is markedly improved extending the shelf life of the product. These encapsulating processes are well known to those skilled in the art.

A variety of one or more flavouring agents may be used. Flavouring agents suitable for use in the present invention include natural, natural-identical, and/or artificial flavouring substance, or mixtures thereof, preferably in their solid in their state, but also in liquid state, e.g. as encapsuled flavour or in mixture with solids. The flavouring agents may be selected from the group consisting of flavours such as almonds, anise, apple, apricot, bay oil, caramel aroma, cashew, cedar leaf oil, cherry, chocolate, cinnamon, clove oil, coconut, coffee, eucalyptus, fruit, punch, grape fruit, hazelnut, honey aroma, lime, liquorice, menthol, menthone, mint, nut-meg, orange, peach, peanut, pear, peppermint, pineapple, plum, raspberry, spearmint, strawberry, thyme, tropical fruits, vanilla, walnut, watermelon, and wintergreen. The flavours may be used alone or in any combination thereof.

The at least one layer substantially free of gum base, in a preferred embodiment, consist substantially of one or more sweeteners and one or more flavours, as described above. The layer may also comprise other additives e.g. fillers, colouring agents, preservatives etc. For some embodiments the layer is crunchy and crisp to improve the organoleptic properties of the layered chewing gum tablet during the initial phase of chewing.

The shape of the layered chewing gum tablet according to the invention may have any shape normally used for tablets, e.g. rectangular with coved upwards surfaces, circular with coved upwards surfaces ("ufo" shape), spherically, tubular, figures etc. Moreover, the layered chewing gum tablets according to the invention may be provided with patterns in the surface e.g. trademarks or the like.

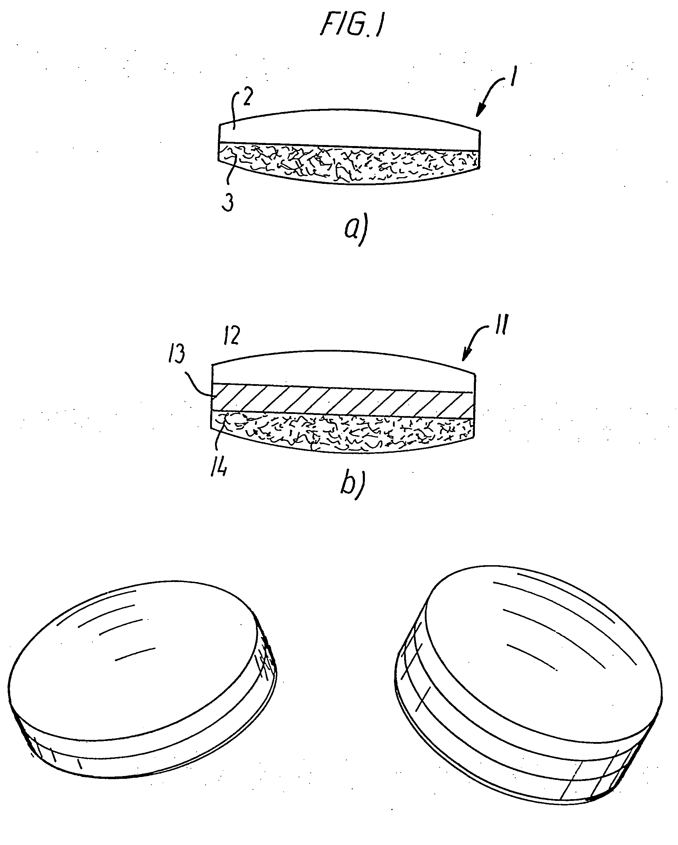

Figure 1A shows a layered tablet 1 according to the invention with two layers 2 and 3. Accordingly, the layer 2 comprises gum base and the layer 3 is substantially free of gum base.

Figure 1B shows a layered tablet 11 according to the invention with three layers 12, 13 and 14. The layer 12 comprises gum base and the layer 13 is substantially free of gum base. The layer 14 may or may not contain gum base.

As seen from figure 1A and 1B the surfaces of the tablets are slightly concave or curved rather than flat to give a more pleasant feeling in the oral cavity during the initial phase of chewing.

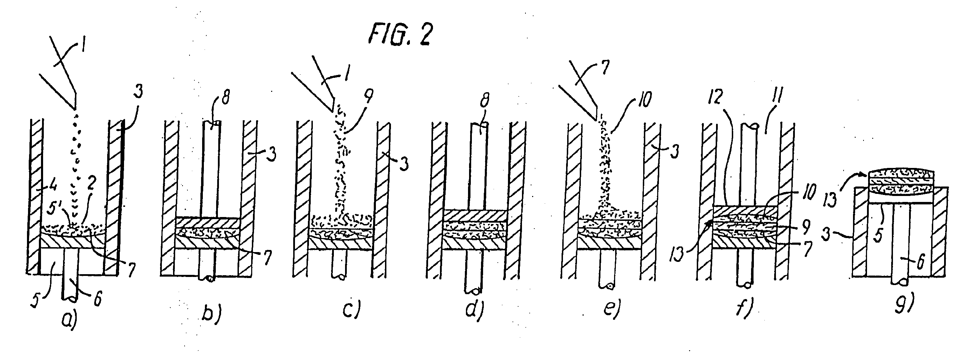

Figure 2 illustrates the method according to the invention to manufacture a layered tablet with three layers. Starting with figure 2a a feeding device 1 feeds granules 2 into a mould 3. The mould 3 consists of a tubular part 4 and a bottom part 5, which are moveable within the tubular part 4, by action of the rod 6. The bottom part 5 is provided with an upwards hollowing 5' to give a concave surface to the compressed tablet. In figure 2b the first portion 7 is pre-compressed by the plunger 8. In figure 2c the feeder 1 feeds a second portion 9 into to mould 3. In figure 2d the second portion is pre-compressed by the plunger 8. As seen in figure 2e a third portion 10 is feed into the mould 3 by the feeder 1. In figure 2f the three portions 7,9 and 10 are finally compressed by the plunger 11 with top part 12 to form a layered chewing gum tablet. Eventually, in figure 2g the layered chewing gum tablet 13 is released from the mould 3 by action of the bottom part 5 and rod 6.

Naturally, the embodiment disclosed in figure 2 is only illustrative and can be modified in many ways with respect to numbers of layers, shape of the mould etc., which modifications are evident for the person skilled in the art. The tablet pressing process according to the method of the invention may also be fully automated. A tablet pressing machine for such an automation can e.g. be procured from the company Fette GmbH, Germany.

### Example

A layered chewing gum tablet with two layers was produced according to the composition given in table 1.

**Table 1.**

| Composition of layered chewing gum tablet according to the invention. | |
|---|---|
| Layer 1 | |
| Ingredient | weight-% |
| Gum base* | 62,58 |
| Menthol * | 2,93 |
| Aspartame* | 0,98 |
| Sorbitol* | 35,20 |
| Beads | 0,87 |
| Acesulfame-k | 0,12 |
| Peppermint powder | 1,22 |

| Layer 2 | |
|---|---|
| Sorbitol | 79,14 |
| Thaumatin | 0,03 |
| Liquorice | 8,33 |
| Guarana | 11,25 |
| Peppermint powder | 1,25 |
| | |
| % gum base in tablet | 143,00 |

| | |
|---|---|
| *Gum base, menthol, aspartame and sorbitol in gum granules produced from underwater granulating. | |

The tablets according to the invention were produced on a Fette 3090 tabletting machine equipped with two stations (available from Fette GmbH, Germany). The moulds had circular cross sections with diameters 16 mm and hollowings to provide tables with concave or curved tablets. The tablets could be produced with a maximum thickness of 8.5 mm.

The mixture for the first layer was feed to the tabletting machine as a mixture of gum granules mixed with beads, acesulfame-k and pepper powder.

The gum granules were previously produced using a commercially available gum base based on synthetic resins (DANfree T Firm 1, available from Gumlink A/S, Denmark). The gum granules were produced by manually mixing the gum base in the form of pellets with menthol flavour crystals (MENTHOL BP/USP, available from SHARP MENTHOL INDIA LIMITED, India) aspartame powder (Aspartame, available from ZHUN YONGXINRONG BIOCHEMICAL PRODUCTS CO., LDT, China), acesulfame-k (Sunett, particle size A, available from Nutrinova GmbH, Germany) and sorbitol (available from CERESTAR Scandinavia A/S, Denmark) to form a composition, which were granulated in a granulator (A5 PAC 6, available from GALA GmbH, Germany) as described in European patent application no. 03388031.1 to give gum granules with average diameters in the range 0.7 to 1.3 mm

The mixture of gum granules mixed with beads (beads V, available from Mane Fils SA), acesulfame-k (available from Nutrition Specialities) and peppermint powder (available from I.P.Callisons - Sons) forming the first layer was feed into the mould to give a first layer with a thickness of approximately 5.50 mm and pre-compressed with a force of 2 kN to give a pre-compressed first layer with thickness of approximately 3,50 mm.

The second layer was feed to the mould onto the first pre-compressed layer as a homogenous mixture of sorbitol (available from Cerastar, Scandinavia), thaumatin (available from OVERSEAL FOODS LTD), liquorice (available from Mafco Worldwide Corporation), guarana (available from Brøste A/S), and peppermint powder (I.P.Callisons - Sons) to form a second layer with a thickness of approximately 3.50 mm. The first and second layers were then compressed with a force of 13 kN to form the layered tablet.

The resulting layered chewing gum tablets had concave or curved surfaces and the thickness at the centre was 6.89 mm and at the edge 4.33 mm. The tablets had a circular cross section with diameter 16 mm. The tablets had an average weight of 13.67 g (ten tablets, average of three measurements).

For the purpose of comparing properties, a batch of layered tablets, containing less than 35.5 weight-% gum base, was prepared. The tablets had the composition given in table 2 below.

**Table 2.**

| The composition of the tablets used for comparison. | |
|---|---|
| Layer 1 | |
| Ingredient | weight-% |
| Gum base | 40,00 |
| Sorbitol | 49,95 |
| Mentol powder | 0,15 |
| Black currant | 2,00 |
| Menthol powder | 0,50 |
| Ascorbic acid | 2,50 |
| Xylitab | 5,00 |
| Aspartame | 0,20 |
| Acesulfame-k | 0,20 |

| Layer 2 | |
|---|---|
| Sorbitol | 98,45 |
| Black currant | 1,00 |
| Menthol powder | 0,25 |
| Aspartame | 0,20 |
| Acesulfame-k | 0,10 |
| | |
| % gum base in tablet | 29,01 |

The tablets for comparison were also produced by use of the Fette 3090 tabletting machine. The machine was equipped with moulds having circular cross sections with diameters 12 mm.

The first layer was feed to the mould as gum base granules with average diameters in the range of approximately 0.5 to 1.5 mm (DANfree T Firm 1, available from Gumlink A/S, Denmark) in mixture with sorbitol (Cerastar, Scandinavia), menthol powder (available from Helm AG), black currant (available from IFF), xylitab (available from company: Xylitab), aspartame (available from Changzhou Niutang Chem. Plant) and acesulfame-k (Nutrition Specialities) to form a layer with approximate thickness of 9 mm. The layer was pre-compressed with force 2 kN.

The second layer was feed onto the pre-compressed first layer as a mixture of sorbitol (Cerastar, Scandinavia), black currant (IFF), menthol powder (Helm AG), aspartame (Changzhou Niutang Chem. Plant) and acesulfame-k (Nutrition Specialities) and with an approximate thickness of 8.5 mm.

The first and second layers were compressed to form a tablet using a force of 24.1 kN. The resulting tablets had concave or curved surfaces and the thickness at the centre was 8.22 mm and the thickness at the edge was 6.77 mm. The average weight of the tablets was 11.27 g (ten tablets, average of three measurements).

The tablets produced according to the invention and the tablets produced for comparison were tested by a group of test persons. In the test the tablets according to the invention (having a high content of gum base) were assessed to be significant better with respect to decrease of volume during chewing, thereby giving a more pleasant feeling in the oral cavity during chewing.

## Claims

1. A layered chewing gum tablet of compressed material comprising at least two layers wherein at least one of the at least two layers contains gum base, **characterized in that** the at least one layer containing gum base comprises gum base in an amount of 35.5 to 86.5 weight-% based on the total weight of the layered chewing gum tablet said gum base being present in compressed gum granules having an average diameter in the range of 0.1 to 2.5 mm.

2. A layered chewing gum tablet according to claim 1, wherein the at least one layer containing gum base contains gum base in an amount of 38.5 to 76.5 weight-%, preferably in an amount of 39.5 to 65.5 weight-%, more preferably in an amount of 40.5 to 55.5 weight-% based on the total weight of the layered chewing gum tablet.

3. A layered chewing gum tablet according to claims 1 or 2, wherein the at least one layer is substantially free of gum base.

4. A layered chewing gum tablet according to claim 3, wherein the at least one layer substantially free of gum base mainly comprises one or more sweeteners and one or more flavours.

5. A layered chewing gum tablet according to claim 4, wherein the at least one layer substantially free of gum base comprises sweetener in an amount of 49.6 to 98.2 weight-%.

6. A layered chewing gum tablet according to claim 4, wherein the at least one layer substantially free of gum base comprises flavours in an amount of 1.8 to 50.4 weight-%.

7. A layered chewing gum tablet according to any of the preceding claims, wherein the at least one layer containing gum base comprises the gum base in one or more gum granules with preferred average diameters in the range of 0.3 mm to 2.1 mm, and more preferred in the range of 0.5 mm to 1.6 mm.

8. A layered chewing gum tablet according to claim 7, wherein the gum granules comprises gum base in an amount of 55 to 100 weight-%, preferable in an amount of 61.5 to 97.2 weight-% based on the weight of the gum granules.

9. A layered chewing gum tablet according to claim 7 or 8, wherein the gum granules have an average diameter in the range of 0.1 mm to 2.5 mm, preferably in the range of 0.3 mm to 2.1 mm, and more preferred in the range of 0.5 mm to 1.6 mm.

10. A layered chewing gum tablet according to anyone of claims 1 to 9, wherein the layer comprising gum base, includes gum granules in a matrix comprising gum granules, sweeteners, flavours, colouring agents, fillers and optional other additives.

11. A layered chewing gum tablet according to any one of the claims 1 to 10, wherein the total weight of the tablet is in the range 3 - 21 gram, preferable in the range 5 - 18 gram.

12. A layered chewing gum tablet according to any of the preceding claims, wherein the tablet comprises a coating, preferably a sugar coating, a sugarfree coating or a film coating.

13. A layered chewing gum tablet according to any of the preceding claims, wherein the at least one layer containing gum base contains 100 weight-% gum base, preferably 56.5 to 75.5 weight-% gum base and suitable 75.6 to 90.4 weight-%, conveniently 90.5 to 97.5 weight-% gum base based on the weight of the at least one layer containing gum base.

14. A layered chewing gum tablet according to any of the preceding claims, wherein the at least one layer containing gum base contain at least about 43.4 to 46.6 weight-% gum base, preferably at least about 45.5 to 51.8 weight-% gum base, more preferably at least 51.8 to 60.5 weight-% gum base based on the weight of the at least one layer containing gum base.

15. A layered chewing gum tablet according to any of the preceding claims, wherein the tablet comprises at least one barrier layer.

16. A layered chewing gum tablet according to claim 15, wherein the at least one layer containing gum base constitutes the at least one barrier layer.

17. A method for manufacturing a layered chewing gum tablet comprising the steps of
i) placing a first portion including gum granules to constitute a first layer in a mould and pre-compress the first portion, and
ii) placing a second portion to constitute a second layer onto the pre-compressed first layer in the mould, and
iii) compressing the layers to form a layered tablet
**characterized in that** the first portion comprises gum base in an amount of 35.5 to 86.5 weight-% based on the total weight of the layered chewing gum tablet and the gum base is present in gum granules having an average diameter in the range of 0.1 to 2.5 mm.

18. A method for manufacturing a layered chewing gum tablet according to claim 17, wherein the second portion is substantially free of gum base.

19. A method for manufacturing a layered chewing gum tablet according to claim 17 or 18, wherein a third portion to constitute a third layer is placed onto the second portion of tablet layer after step ii) and before step iii) .

20. A method for manufacturing a layered chewing gum tablet according to claim 19, wherein the second portion is pre-compressed before the third portion of tablet layer is placed onto the second portion of tablet layer.

21. A method for manufacturing a layered chewing gum tablet according to any of claims 17-20, wherein the first portion forming the tablet layers is constituted by granules having an average diameter in the range of 0.1 mm to 2.5 mm, preferably in the range of 0.3 mm to 2.1 mm, and more preferred in the range of 0.5 mm to 1.6 mm.

22. A method for manufacturing a layered chewing gum tablet according to any of claims 17-21, wherein the granules comprises gum base in an amount of 55 to 100 weight-%, preferable in an amount of 61.5 to 97.2 weight-% based on the weight of the granules

23. A method for manufacturing a layered chewing gum tablet according to any of claims 17-22, wherein the method comprises the further step of coating the tablet.
